# EUROPÄISCHE PATENTANMELDUNG

(11) **EP 2 829 517 A1**
(43) Veröffentlichungstag der Anmeldung: **28.01.2015**
(21) Anmeldenummer: 13177432.5
(22) Anmeldetag: 22.07.2013
(51) Int. Cl.: C02F 1/28, C10J 3/00, C02F 11/10, C02F 3/12, C02F 101/30

(54) **Verwendung eines Granulats aus einer Feststoffvergasung**

(71) Anmelder: KOPF SynGas GmbH & Co. KG, 72172 Sulz-Bergfelden (DE)
(72) Erfinder: Gaiffi, Michael, 72160 Horb (DE)
(74) Vertreter: Späth, Dieter

(57) **Zusammenfassung**

Die Erfindung schlägt vor, Granulat, das als Rückstand bei einer Biogasgewinnung durch Vergasung von Biomasse anfällt, als Adsorptionsmittel anstelle von Aktivkohle zu verwenden.

## Beschreibung

Die Erfindung betrifft die Verwendung eines teilchenförmigen Feststoffs, der bei einer Feststoffvergasung anfällt. Durch Vergasung von Feststoffen, die insbesondere Kohlenstoff oder auch andere brennbare Bestandteile enthalten, lässt sich ein brennbares Gas gewinnen, das auch als Synthesegas bezeichnet wird. Bei der Vergasung fällt ein nicht thermisch verwertbarer Feststoff an, der auch als Rückstand oder Asche bezeichnet werden kann und entsorgt werden muss. Der Feststoff fällt in Form von Teilchen mit unterschiedlichen Teilchengrößen an und kann als Schüttgut, Granulat oder Pulver bezeichnet werden. In Form kleiner Teilchen kann der Feststoff in dem einen Vergaser verlassenden Synthesegas enthalten sein und mit beispielsweise einem Zyklon-Abscheider vom Gas abgetrennt werden oder auch über eine Taktschleuse abgezogen werden. Feststoff, der aufgrund seiner Teilchengröße einen Vergaser nicht mit dem Synthesegas verlässt, kann durch Schwerkraft oder mechanische Förderung aus dem Vergaser entfernt werden.

Bislang wird teilchenförmiger Feststoff, der bei einer Feststoffvergasung anfällt, beispielsweise als Zuschlagstoff für Zement verwertet oder durch Deponierung entsorgt.

Aufgabe der Erfindung ist eine wirtschaftliche Verwertung teilchenförmigen Feststoffs, der bei einer Feststoffvergasung anfällt. Zu diesem Zweck schlägt die Erfindung eine Verwendung eines teilchenförmigen Festsstoffs, der bei einer Feststoffvergasung anfällt, als Adsorptionsmittel vor. Es hat sich gezeigt, dass ein teilchenförmiger Feststoff, der bei einer Feststoffvergasung anfällt, eine ähnliche Struktur aufweist wie Aktivkohle, nämlich eine offenporige, feinkörnige Struktur mit großer innerer Oberfläche. Adsorptionseigenschaften eines solchen Feststoffs sind denen von Aktivkohle vergleichbar, wenn auch die Adsorptionswirkung eines teilchenförmigen Feststoffs, der bei einer Feststoffvergasung anfällt, geringer als die Adsorptionswirkung von Aktivkohle ist. Aufgrund der Adsorptionseigenschaften teilchenförmigen Feststoffs, der bei einer Feststoffvergasung anfällt, sieht die Erfindung einer Verwendung solchen Feststoffs anstelle von Aktivkohle vor, also beispielsweise als Adsorptionsmittel im Bereich Chemie, evtl. Medizin, Wasser-und Abwasserbehandlung, Lüftungs- und Klimatechnik. Der bei einer Feststoffvergasung anfallende teilchenförmige Feststoff lässt sich beispielsweise als Filtermittel und zum Binden von Gerüchen verwenden.

Die Erfindung ist insbesondere auf die Verwendung von teilchenförmigem Feststoff, der bei einer Vergasung von Biomasse bzw. Klärschlamm anfällt, als Adsorptionsmittel gerichtet. Dabei sind unter Biomasse insbesondere nachwachsende Rohstoffe wie Pflanzen und Pflanzenreste zu verstehen, aus denen sich durch Vergasung brennbares Gas gewinnen lässt, das auch als Biogas bezeichnet werden kann und unter den Oberbegriff Synthesegas fällt. Auch tierische Erzeugnisse, beispielsweise Exkremente, aus denen sich durch Vergasung ein brennbares Gas gewinnen lässt, können als Biomasse aufgefasst werden.

Insbesondere ist die Erfindung auf eine Verwendung eines teilchenförmigen Feststoffs, der bei einer Feststoffvergasung anfällt, zu einer Abwasserbehandlung und speziell zu einer Abwasserhandlung in Kläranlagen vorgesehen, insbesondere wird der Feststoff anstelle von Aktivkohle und üblicherweise in einem Zulauf einer Kläranlage nach einer Grobabscheidung mit Rechen und mechanischem Filter/Gitter eingesetzt bzw. zudosiert. In Abwasser bzw. in einer Kläranlage adsorbiert teilchenförmiger Feststoff, der bei einer Feststoffvergasung anfällt, Medikamente, Hormone und dgl., die in der Kläranlage nicht abgebaut werden, sondern sich im Wasser anreichern, wenn sie nicht abgetrennt werden.

Nach seiner Verwendung als Adsorptionsmittel kann der teilchenförmige Feststoff, der aus einer Feststoffvergasung stammt, wieder der bzw. einer Vergasung zugeführt werden. Bei der hohen Temperatur einer Vergasung zersetzen sich adsorbierte Stoffe und werden unschädlich.

## Patentansprüche

1. Verwendung eines teilchenförmigen Feststoffs, der bei einer Feststoffvergasung anfällt, als Adsorptionsmittel.

2. Verwendung nach Anspruch 1, **dadurch gekennzeichnet, dass** ein teilchenförmiger Feststoff als Adsorptionsmittel verwendet wird, der bei einer Vergasung von Biomasse anfällt.

3. Verwendung nach Anspruch 1 oder 2, **dadurch gekennzeichnet, dass** ein teilchenförmiger Feststoff als Adsorptionsmittel verwendet wird, der bei einer Vergasung von Klärschlamm anfällt.

4. Verwendung nach einem der Ansprüche 1 bis 3, **dadurch gekennzeichnet, dass** der teilchenförmige Feststoff als Adsorptionsmittel anstelle von Aktivkohle verwendet wird.

5. Verwendung nach einem der Ansprüche 1 bis 4, **gekennzeichnet durch** eine Verwendung des teilchenförmigen Feststoffs zu einer Abwasserbehandlung.

6. Verwendung nach Anspruch 5, **gekennzeichnet durch** eine Verwendung des teilchenförmigen Feststoffs in einer Kläranlage.

7. Verwendung nach einem der vorhergehenden Ansprüche, **dadurch gekennzeichnet, dass** der teilchenförmige Feststoff nach seiner Verwendung als Adsorptionsmittel wieder einer Vergasung zugeführt wird.
